# EUROPEAN PATENT APPLICATION

(11) **EP 2 354 004 A1**
(43) Date of publication of application: **10.08.2011**
(21) Application number: 10151983.3
(22) Date of filing: 28.01.2010
(51) Int. Cl.: B64F 1/36

(54) **A device for loading luggage to a container**

(71) Applicant: Ingenieursbureau Moderniek B.V., 3762 EV Soest (NL)
(72) Inventor: Nijmeijer, Johannes Jan, 3762 VC, Soest (NL)
(74) Representative: van Helden, Marinus

(57) **Abstract**

A device (1) for loading luggage (2) to a container (3) comprises a supporting member (5) for supporting a container (3) and a luggage supplier (7) for supplying luggage (2) to a container (3) being supported by the supporting member (5) under operating conditions. The device (1) is provided with a tilting mechanism (9, 10, 10a, 11, 12) for tilting the supporting member (5) with respect to the luggage supplier (7) about a tilting axis (8) having a horizontal component.

## Description

The invention relates to a device for loading luggage to a container, comprising a supporting member for supporting a container and a luggage supplier for supplying luggage to a container being supported by the supporting member under operating conditions.

Such a device is known from EP 1 980 490. The known device is used for loading luggage to containers which are used in aircrafts. Luggage is transported by a conveyor to a container through a side opening thereof. The container to be loaded can be moved in vertical direction in order to load luggage layer-by-layer in the container. The conveyor is movable within a horizontal plane in order to transfer luggage to the entire space of the container.

It is an object of the present invention to provide a device for loading luggage to a container which facilitates the loading process.

In order to achieve this object the device is provided with a tilting mechanism for tilting the supporting member with respect to the luggage supplier about a tilting axis having a horizontal component.

Due to this feature a container can be tilted to one side thereof such that the gravity force in the direction of that side will be exerted on the luggage when the luggage is received by the container. This means that the luggage tends to move automatically to the actual lower portion of the container. In practice, the actual lower portion may be a side wall of the container opposite to an open side through which the luggage is loaded, such as in case of an aircraft container. The advantage of the device according to the invention is that the luggage will easier reach a remote portion of the container with respect to the luggage supplier. This makes loading of the container easy, since the distance between the luggage supplier itself and the remote portion may be relatively large.

In a practical embodiment the luggage supplier is adapted to supply luggage in a transport direction and the tilting axis extends transversely with respect to the transport direction such that the supporting member is able to angle downwardly as seen in the transport direction. This means that luggage can be transferred to the container at one side of the container whereas the opposite side is lowered such that the loaded luggage tends to move automatically to the opposite side. It is noted that the transport direction and the tilting axis may be perpendicular with respect to each other but this is not necessary.

Preferably, the supporting member and the luggage supplier are movable with respect to each other in horizontal and/or vertical direction, since this provides the opportunity to load the luggage layer-by-layer and spread over the entire container. It also provides the possibility to load several containers located behind each other. In the latter case the supporting member may support several containers or several supporting members each supporting a container may be present.

The supporting member may comprise a platform for supporting a vehicle including a container. In this case the container can be fixed or releasably mounted to the vehicle or a cart or the like. The platform may be flat and being configured such that its upper surface is flush with the adjacent floor so as to facilitate driving to and from the platform. Under operating conditions the supporting member tilts the vehicle including the container in order to load the container.

Alternatively, the supporting member is part of a container conveyor for transporting containers to and from the luggage supplier and the supporting member is displaceable with respect to the remainder of the container conveyor. This means that containers can be transferred by the container conveyor to a location where the luggage supplier is present. At this location the container conveyor is able to displace the container with respect to the remainder of the container conveyor, i.e. tilting and/or horizontal and/or vertical displacement, thus forming the supporting member.

The device may be provided with a shaking mechanism for shaking a container being supported by the supporting member under operating conditions. The advantage of this feature is that it improves the degree of filling of a container. The shaking mechanism may comprise suction cups, for example, which engage the container and are moved by a vibration member.

The luggage supplier may comprise a conveyor for transporting luggage in a transport direction, and a frame which supports the conveyor. The transfer of luggage from the conveyor to the container may be assisted by an operator who guides the luggage to a certain location in the container. Furthermore, the operator may handle the luggage on the conveyor such that it has the correct orientation before it is received by the container. In practice the conveyor may be provided with an endless belt. It is noted that the configuration of he luggage supplier is also applicable in a device wherein the supporting member is not tiltable.

Preferably, the conveyor is rotatable with respect to the frame about an axis of rotation extending upwardly, since this provides more flexibility in controlling the location at the container to which the luggage is transferred. A practical angle of rotation as seen from above in case of an aircraft container which is loaded through an opening in a side wall thereof is 60°, but a larger or smaller angle is possible.

The conveyor may be movable with respect to the frame in a horizontal direction. This means that containers can be loaded at different locations with respect to the frame. It also provides the opportunity to compensate a horizontal displacement of the container when this is tilted by the supporting member. The conveyor may be mounted on a mobile cart being movable on the frame, for example.

In a practical embodiment the luggage supplier is provided with a main conveyor for transporting luggage to the conveyor, and the conveyor is movable along the main conveyor and adapted for receiving luggage from the main conveyor at another location along the main conveyor.

The conveyor may be provided with a deflector for guiding luggage from the main conveyor to the conveyor. When the conveyor moves along the main conveyor the deflector is automatically moved along the main conveyor, as well.

In a preferred embodiment the conveyor is mounted to a carrier which is moveable with respect to the frame and which comprises space for an operator next to the conveyor so as to enable the operator to travel with the carrier along the main conveyor. This is advantageous when several containers located along the main conveyor have to be loaded; in that case the operator can travel by the carrier from container to container and load the containers.

The device may comprise another supporting member spaced from said supporting member, which is located at said other location along the main conveyor. This provides the opportunity to load a second container at the other supporting member by using the same conveyor.

The tilting mechanism may be formed by a proximal portion of the supporting member which is slidably connected to a chassis in upward direction, and by a distal portion of the supporting member which is disposed beyond the proximal portion as seen from the chassis and which rests on the ground and is movable with respect to the chassis. Upon displacing the proximal portion upwardly with respect to the chassis the distal portion is drawn to the chassis while staying on the floor. As a consequence, the proximal portion of the supporting member will rotate about the distal portion thereof. The chassis may be formed by the frame.

The invention will hereafter be elucidated with reference to the very schematic drawings showing embodiments of the invention by way of example.
Fig. 1 is a top view of an embodiment of a device according to the invention.
Fig. 2 is a side view of the embodiment of Fig. 1.
Fig. 3 is a similar view as Fig. 2, but illustrating the device under operating conditions.
Fig. 4 is a similar view as Fig. 1, but showing an alternative embodiment.
Fig. 5 is a side view of the embodiment of Fig. 4.
Fig. 6 is a similar view as Fig. 5, but illustrating the alternative embodiment under operating conditions.

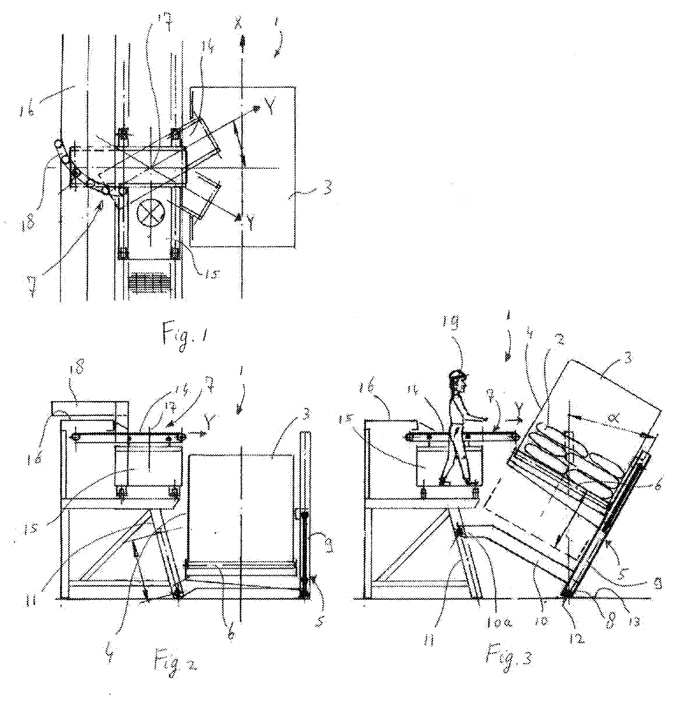

Figs. 1-3 show an embodiment of a device 1 for loading luggage 2 to a container 3. In this case the container 3 is suitable to be loaded in aircrafts and is provided with a side opening 4 through which the luggage 2 can be put into the container 3. The block-shaped container 3 may have a closed bottom side and top side and three closed side walls in addition to the side wall including the side opening 4. Nevertheless, alternative container configurations are conceivable.

The device 1 comprises a supporting member 5. In the embodiment as shown in Figs. 1-3 the supporting member 5 is part of a container conveyor 6, which is able to transport a container 3 in a container transport direction X. The container conveyor 6 comprises a roller bed, but alternative supporting and conveying means are possible. In any case, the supporting member 5 is able to support the container 3.

The device 1 further comprises a luggage supplier 7. Under operating conditions the luggage supplier 7 supplies luggage in a luggage transport direction Y to the container 3. The container transport direction X in which the container conveyor 6 transports a container 3 is transverse to the luggage transport direction Y.

The supporting member 5 is located downstream of the luggage supplier 7 as seen in the luggage transport direction Y. This means that under operating conditions luggage 2 from the luggage supplier 7 can be received by the container 3 that is supported by the supporting member 5.

According to the invention the device 1 is provided with a tilting mechanism for tilting the supporting member 5 with respect to the luggage supplier 7 about a tilting axis 8. In the embodiment as shown in Figs. 1-3 the tilting axis 8 extends substantially horizontally and transversely with respect to the luggage transport direction Y. In this case the tilting axis 8 is parallel to the container transport direction X. As illustrated in Fig. 3 the supporting member 5 is tiltable such that it angles downwardly as seen in the transport direction Y. A practical tilting angle α is about 30°, but a smaller or larger angle α is possible. The supporting member 5 is also movable in vertical direction with respect to the luggage supplier 7 as illustrated by a double-headed arrow in Fig. 3.

In the embodiment as shown in Figs. 1-3 the tilting mechanism is arranged such that upon tilting the supporting member 5 it is also displaced in horizontal direction towards the luggage supplier 7. The supporting member 5 comprises a lifting column 9 and a container 3 can be displaced along the lifting column 9. The lifting column 9 is fixed to a connecting element 10, of which a proximal portion 10a is slidably connected to a frame 11. The lifting column 9 is provided with a roller 12 which is received in a guide 13 on the floor. The roller 12 forms a distal portion of the supporting member 5 which lies beyond the proximal portion 10a as seen from the frame 11. The proximal portion 10a of the connecting element 10 located at the frame 11 can be displaced upwardly with respect to the frame 11, for example by a hydraulic system. This results in both a displacement of the lifting column 9 towards the frame 11 and a rotation thereof about the tilting axis 8. It is noted that in this embodiment the tilting axis 8 coincides with the axis of rotation of the roller 8.

The luggage supplier 7 comprises a conveyor 14 formed by an endless belt which is drivable in the luggage transport direction Y. The conveyor is rotatably mounted to a. mobile carrier 15 which is displaceable with respect to the frame 11 along a main conveyor 16. The conveyor 7 is rotatable with respect to the carrier 15 about an axis of rotation 17 which extends substantially vertically as shown in Figs. 1 and 2. This means that the luggage transport direction Y is not a single direction. This facilitates loading of a container 3 at a front and back side thereof as seen in the container transport direction X. Furthermore, the conveyor 14 is movable with respect to the carrier 15 in a horizontal direction aligned to itself, which can be seen when comparing the position of the conveyor 14 in Fig. 2 and Fig. 3.

In this embodiment the conveyor 14 extends below the main conveyor 16 such that luggage 2 can move downwardly from the main conveyor 16 to the conveyor 14. Luggage 2 that is supplied by the main conveyor 16 can be transferred to the conveyor 14 via a deflector 18 which is mounted to the carrier 15 in this embodiment. This means that the carrier 15 including the conveyor 14 can be displaced along the main conveyor 16 whereas the luggage 2 is automatically guided to the conveyor 14 by the deflector 18. This provides the opportunity to load several containers 3 that are located behind each other at different supporting members 5 along the main conveyor 16. After loading a first container 3 by means of the conveyor 14 the carrier 15 can be displaced to the next container 3 for loading the next container 3.

In practical use an operator 19 stands on the carrier 15 next to the conveyor 14 in order to orient the luggage 2 on the conveyor 14, to control the position and orientation of the conveyor 14 and to guide the luggage 2 to the container 3. When loading an empty container 3 the container 3 is tilted and lifted such that the side opening 4 is located at the level of the conveyor 14, as shown in Fig. 3. The operator 19 directs the conveyor 14 to the side opening 4 in horizontal direction and loads the luggage first on the bottom of the container 3. The front and back portions of the container 3 can be loaded easily by rotating the conveyor 14 about the axis of rotation 17. After having loaded a first layer of luggage 2 in the container 3 the supporting member 5 is lowered with respect to the conveyor 14 such that a next layer of luggage 2 can be loaded. Due to the tilted position of the container 3 the luggage 2 will slide towards and easily reach the side wall of the container 3 opposite to the side opening 4.

Due to the mobile carrier 15 the operator can travel to a next container 3 when the device 1 is adapted such that the main conveyor 16 and the container transport direction X are substantially parallel. In that case the mobile carrier 15 travels between the track of the main conveyor 16 and the row of containers 3 and parallel to this track and row.

The device 1 can be provided with a shaking element (not shown) for shaking the container 3. This improves the efficiency of loading further.

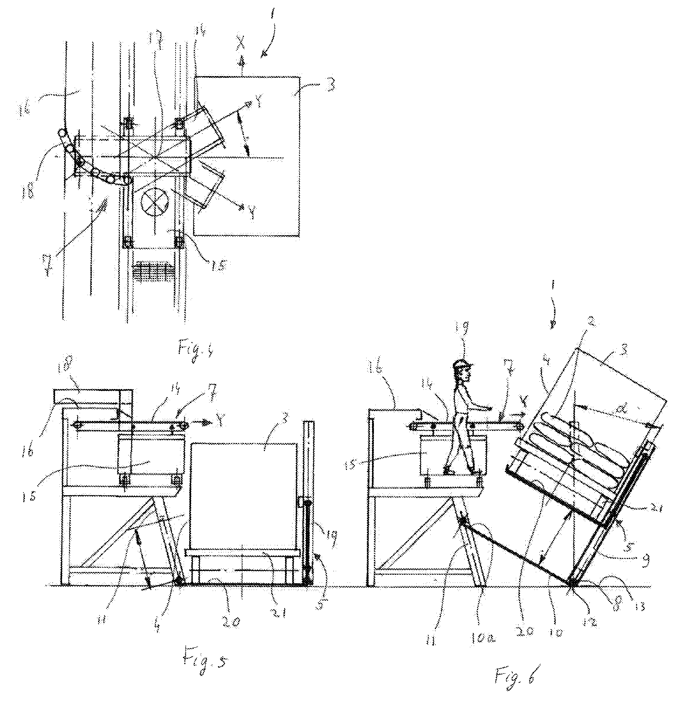

Figs. 4-6 show different views of an alternative embodiment of the device 1 according to the invention. In this embodiment the supporting member 5 comprises a platform 20 for supporting a vehicle 21 including a container 3. The container 3 can be fixed or releasably mounted to the vehicle 21. The platform 20 is flat and is adapted such that its upper surface is flush with the adjacent floor so as to facilitate driving to and from the platform 20. As illustrated in Fig. 6 the supporting member 5 tilts and lifts the vehicle 21 including the container 3 in order to load the container 3. It is noted that in Figs. 4-6 for corresponding elements similar reference signs are used as in Figs. 1-3.

The invention is not limited to the embodiments as described above and shown in the drawings, which can be varied in several ways without departing from the scope of the invention. It is conceivable, for example, that the container transport direction extends substantially parallel to the conveying direction of the main conveyor, but the tracks thereof may be curved.

## Claims

1. A device (1) for loading luggage (2) to a container (3), comprising a supporting member (5) for supporting a container (3) and a luggage supplier (7) for supplying luggage (2) to a container (3) being supported by the supporting member (5) under operating conditions, **characterized in that** the device (1) is provided with a tilting mechanism (9, 10, 10a, 11, 12) for tilting the supporting member (5) with respect to the luggage supplier (7) about a tilting axis (8) having a horizontal component.

2. A device (1) according to claim 1, wherein the luggage supplier (7) is adapted to supply luggage (2) in a luggage transport direction (Y) and wherein the tilting axis (8) extends transversely with respect to the transport direction (Y) such that the supporting member (5) is able to angle downwardly as seen in the transport direction (Y).

3. A device (1) according to claim 1 or 2, wherein the supporting member (5) and the luggage supplier (7) are movable with respect to each other in horizontal and/or vertical direction.

4. A device (1) according to one of the preceding claims, wherein the supporting member (5) comprises a platform (20) for supporting a vehicle (21) including a container (3).

5. A device (1) according to one of the claims 1-3, wherein the supporting member (5) is part of a container conveyor (6) for transporting containers (3) to and from the luggage supplier (7), and wherein the supporting member (5) is displaceable with respect to the remainder of the container conveyor (6).

6. A device (1) according to one of the preceding claims, wherein the device (1) is provided with a shaking mechanism for shaking a container (3) being supported by the supporting member (5) under operating conditions.

7. A device (1) according to one of the preceding claims, wherein the luggage supplier (7) comprises a conveyor (14) for transporting luggage (2) in a luggage transport direction (Y), and a frame (11) which supports the conveyor (14).

8. A device (1) according to claim 7, wherein the conveyor (14) is rotatable with respect to the frame (11) about an axis of rotation (17) extending upwardly.

9. A device (1) according to claim 7 or 8, wherein the conveyor (14) is movable with respect to the frame (11) in a horizontal direction.

10. A device (1) according to claim 9, wherein the luggage supplier (7) is provided with a main conveyor (16) for transporting luggage (2) to the conveyor (14), and wherein the conveyor (14) is movable along the main conveyor (16) and adapted for receiving luggage (2) from the main conveyor (16) at another location along the main conveyor (16).

11. A device (1) according to claim 10, wherein the conveyor (14) is provided with a deflector (18) for guiding luggage (2) from the main conveyor (16) to the conveyor (14).

12. A device (1) according to one of the claims 9-11, wherein the conveyor (14) is mounted to a carrier (15) being moveable with respect to the frame (11) and wherein the carrier (15) comprises space for an operator (19) next to the conveyor (14) so as to enable the operator (19) to travel with the carrier (15) along the main conveyor (16).

13. A device (1) according to one of the claims 10-12, wherein the device (1) comprises another supporting member spaced from said supporting member (5), which is located at said other location along the main conveyor (16).

14. A device (1) according to one of the preceding claims, wherein the tilting mechanism is formed by a proximal portion (10a) of the supporting member (5) being slidably connected to a chassis (11) in upward direction, and a distal portion (12) of the supporting member (5) being disposed beyond the proximal portion (10a) as seen from the chassis (11) which rests on the ground and is movable with respect to the chassis (11).

15. A device (1) according to one of the claims 7-13 and claim 14, wherein the chassis is formed by the frame (11).
